# FASCICULE DE BREVET EUROPEEN

(11) **EP 1 355 724 B1**
(45) Date de publication et mention de la délivrance du brevet: **14.09.2011**
(21) Numéro de dépôt: 01995765.3
(22) Date de dépôt: 21.12.2001
(51) Int. Cl.: B01D 53/86, F24C 15/20, B01D 53/32

(54) **DISPOSITIF DE TRAITEMENT PAR CATALYSE DES ODEURS ET HOTTE DE FILTRATION EQUIPPE D'UN TEL DISPOSITIF**
VORRICHTUNG ZUR KATALYTISCHEN BEHANDLUNG VON GERÜCHEN UND DAMIT AUSGESTATTETE FILTERHAUBE
DEVICE FOR CATALYTIC TREATMENT OF SMELLS AND FILTERING HOOD EQUIPPED THEREWITH

(30) Priorité: 21.12.2000 FR 0016772
(43) Date de publication de la demande: 29.10.2003
(73) Titulaire: FAGORBRANDT SAS, 92500 Rueil Malmaison (FR)
(72) Inventeur: AUTIN, Francis, 86000 Poitiers (FR); BARRAULT, Joël, F-86240 Liguge (FR); CHEVRIER, Jean-Paul, F-45590 St Cyr en Val (FR); PASQUIERS, Stéphane, F-78140 Velizy (FR); ROUSSEAU, Antoine, F-75002 Paris (FR); TATIBOUET, Jean-Michel, F-86000 Poitiers (FR)
(74) Mandataire: Stankoff, Hélène
(86) Numéro de dépôt international: PCT/FR2001/004165
(87) Numéro de publication internationale: WO 2002/049743

(56) Documents cités:
- EP-A- 0 585 047
- EP-A- 1 086 740
- WO-A-00/18494
- WO-A-96/01969
- WO-A-99/43419
- FR-A- 2 739 791

## Description

La présente invention concerne un dispositif de traitement par catalyse des odeurs de cuisson.

Elle concerne également un système de traitement par catalyse des odeurs et une hotte de filtration des fumées de cuisson, mettant en oeuvre un dispositif de traitement conforme à l'invention.

Plus généralement, l'invention s'inscrit dans le domaine des hottes filtrantes domestiques.

Lors de la cuisson des aliments, les fumées et gaz de cuisson contiennent de nombreuses particules en suspension, grasses et/ou odorantes.

Il existe une multitude de molécules odorantes présentes chacune en faible quantité dans les fumées de cuisson, et formées de manière générale de composés organiques volatils (COV).

Il est important de pouvoir traiter efficacement ces molécules odorantes, en particulier lorsque la hotte de filtration est du type à recyclage, les gaz et fumées de cuisson étant évacués après traitement dans l'air ambiant.

On connaît des dispositifs de traitement des odeurs par réaction catalytique permettant la dégradation des composés organiques volatils, tels que décrits par exemple dans le document WO 9601969.

Un tel dispositif de traitement est en outre décrit dans le brevet américain US 5 904 750.

Le dispositif de traitement par catalyse comporte un support formé d'une structure en nid d'abeilles définissant des canaux pour le passage des fumées de cuisson.

Ce support comprend un revêtement (en anglais "washcoat") contenant de la zircone et au moins un oxyde de manganèse, de cérium ou de cobalt.

Sur ce revêtement, au moins un métal précieux est déposé pour la réaction catalytique.

Un traitement relativement efficace peut ainsi être obtenu sur les composés organiques volatils dès lors qu'une température de 250° C est maintenue autour du catalyseur.

Cependant, dans une hotte de filtration domestique, la température de fonctionnement ne peut excéder 80° C sans chauffage additionnel.

Un dispositif de traitement par catalyse tel que décrit précédemment se révèle alors inefficace pour le traitement des fumées de cuisson dans des conditions de température relativement basses.

On connaît également dans les documents WO 9943419 et WO 0018494 un dispositif de traitement du gaz associant un catalyseur et des moyens de génération de plasma. Cependant, le catalyseur à base de zéolithe nécessite également des températures de fonctionnement élevées, de l'ordre de 180°C.

La présente invention a pour but de proposer un dispositif de traitement par catalyse des odeurs de cuisson permettant une dégradation efficace des molécules odorantes dans des conditions de température usuelles dans une hotte de filtration.

A cet effet, un dispositif de traitement par catalyse des odeurs de cuisson, comporte un support monolithique, comprenant des canaux de passage des fumées de cuisson, et des particules actives de traitement déposées sur le support monolithique, et des moyens de génération d'un plasma de décharge disposés de part et d'autre du support monolithique.

Le support monolithique est revêtu d'un revêtement d'oxydes minéraux sur lequel sont déposées les particules actives de traitement, les particules de traitement étant formées d'un ou plusieurs métaux choisis parmi le platine, le palladium, le rhodium, l'or, l'argent, le ruthénium, le fer, le cuivre, le cobalt, le nickel, le manganèse ou le chrome.

Un plasma est ainsi créé à l'intérieur même des canaux de passage des fumées de cuisson, dans le support revêtu des particules actives de traitement.

On observe alors une activation des composés organiques volatils grâce au plasma, favorisant la transformation catalytique des molécules odorantes au contact des particules actives de traitement.

Cette activation est réalisée directement sur les sites de catalyse formés à l'intérieur des canaux de passage des fumées de cuisson.

Le dispositif de traitement par catalyse conforme à l'invention forme ainsi une structure monobloc facilement adaptable à un conduit de hotte de filtration domestique.

On peut obtenir un taux de destruction des composés organiques volatils de l'ordre de 30 % avec un dispositif de traitement conforme à l'invention porté à une température sensiblement égale à 80° C.

En comparaison, le même taux de destruction serait obtenu en l'absence de plasma avec ce dispositif de traitement si celui-ci était porté à une température de 180° C.

Selon une caractéristique préférée de l'invention, les moyens de génération d'un plasma de décharge comprennent deux électrodes disposées respectivement sur deux faces opposées du support monolithique.

On peut ainsi former dans l'épaisseur du support monolithique un plasma de décharge entre deux électrodes.

Ce mode de réalisation est particulièrement pratique dès lors qu'on colle directement les électrodes sur une face du support monolithique.

Selon une autre caractéristique préférée de l'invention, le support monolithique comprend au moins deux séries de canaux parallèles, s'étendant respectivement dans des plans parallèles, et les électrodes des moyens de génération de plasma de décharge sont des plaques disposées parallèlement auxdits canaux.

Le plasma de décharge est ainsi généré entre les électrodes, transversalement à la direction de circulation des fumées de cuisson à l'intérieur des canaux parallèles.

Les fumées de cuisson circulent ainsi à l'intérieur du plasma de décharge généré dans les canaux du support monolithique.

Selon un autre aspect de l'invention, un système de traitement par catalyse des odeurs de cuisson comprend au moins deux dispositifs de traitement conformes à l'invention, les moyens de génération de plasma de décharge de deux dispositifs de traitement juxtaposés comprenant une électrode commune.

On peut ainsi associer plusieurs dispositifs de traitement sans démultiplier les électrodes nécessaires à la génération d'un plasma de décharge dans chacun des supports de catalyse.

Selon une caractéristique préférée de l'invention, ce système de traitement est disposé dans un conduit de circulation des fumées de cuisson, une portion du conduit en matière isolante s'étendant entre une électrode et le support monolithique d'au moins un dispositif de traitement.

Le conduit de circulation des fumées forme ainsi une barrière diélectrique entre l'électrode et le support monolithique, nécessaire à la formation d'un plasma de décharge à barrière diélectrique (DBD).

Enfin, la présente invention concerne une hotte de filtration des fumées de cuisson comprenant un dispositif de traitement ou un système de traitement par catalyse conformes à l'invention.

Une hotte de filtration ainsi équipée permet de traiter efficacement les gaz et fumées de cuisson, notamment avant leur recyclage dans l'air ambiant, tout en respectant une température limite de fonctionnement de l'ordre de 80° C.

D'autres particularités et avantages de l'invention apparaîtront encore dans la description ci-après.

Aux dessins annexés donnés à titre d'exemples non limitatifs :
- la figure 1 est une vue schématique en perspective illustrant le principe d'un dispositif de traitement conforme à l'invention ;
- la figure 2 est une vue en perspective illustrant un système de traitement dans un conduit de circulation des fumées conforme à un mode de réalisation de l'invention ;
- la figure 3 est une vue en perspective illustrant un système de traitement conforme à un deuxième mode de réalisation de l'invention ; et
- la figure 4 est une vue schématique illustrant une hotte de filtration des fumées conforme à l'invention.

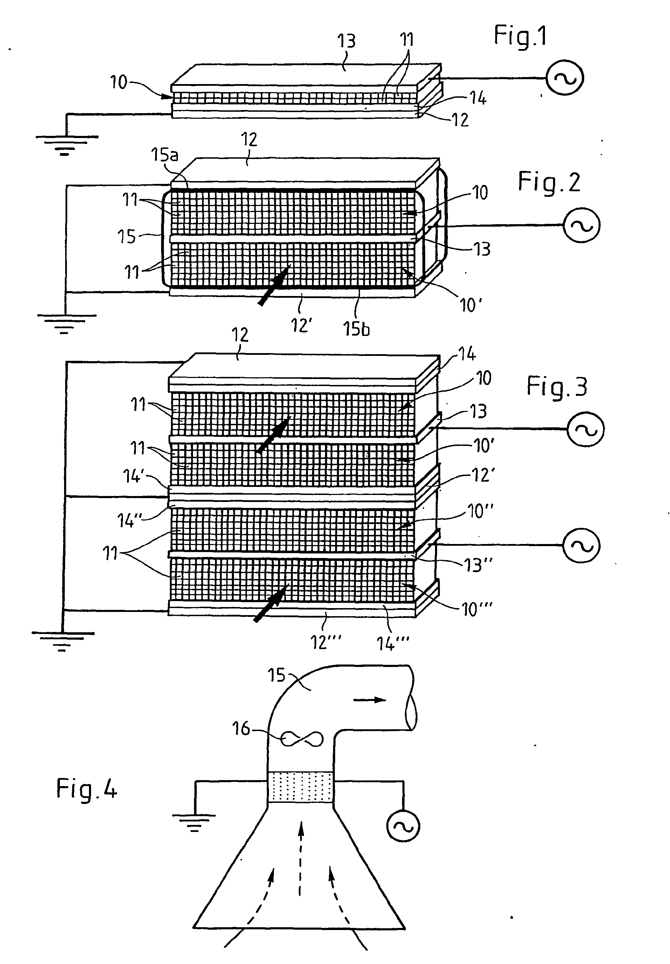

On va décrire tout d'abord, en référence à la figure 1, un dispositif de traitement par couplage plasma-catalyse permettant d'illustrer le principe même de l'invention.

Ce dispositif de traitement 10 comporte de manière générale un catalyseur associé à des moyens de génération d'un plasma de décharge disposés de part et d'autre du catalyseur.

Plus particulièrement, le catalyseur est formé d'un bloc 10 d'une seule pièce, dans lequel sont ménagés des canaux 11 permettant le passage des fumées de cuisson.

Le bloc ou support monolithique 10 est ici par exemple réalisé en céramique telle que de la cordiérite Mg₂ Al₄ Si₅ O₁₈.

Dans cet exemple, le support monolithique 10 comprend deux séries de canaux parallèles s'étendant respectivement dans des plans parallèles.

Des particules actives de traitement sont déposées sur le support 10 de manière à former différents sites de catalyse.

Ces particules actives de traitement peuvent être formées d'un métal noble tel que du platine (Pt), du palladium (Pd), du rhodium (Rh), de l'or (Au), de l'argent (Ag) ou du ruthénium (Ru).

Les particules actives peuvent également être formées d'un métal non noble tel que le fer (Fe), le cuivre (Cu), le cobalt (Co), le nickel (Ni), le manganèse (Mn) ou le chrome (Cr).

Bien entendu, les particules actives peuvent être choisies parmi l'un de ces métaux ou une combinaison de deux ou plusieurs de ces métaux.

Ces métaux sont déposés sur le support 10 sous forme de petites particules très dispersées à la surface de ce support 10.

De préférence, afin d'augmenter la surface d'échange pour les réactions catalytiques et favoriser la dispersion des particules actives, le support 10 est revêtu d'un revêtement d'oxydes minéraux formant un "washcoat".

Ce revêtement peut être formé d'oxydes minéraux à base d'aluminium (Al), de cérium (Ce), de lanthane (La), de zirconium (Zr), de manganèse (Mn) ou de titane (Ti).

Ici aussi, le revêtement peut être formé d'un de ces oxydes pris isolément ou d'une combinaison de deux ou plusieurs de ces oxydes minéraux.

A titre d'exemple, le revêtement peut être formé d'une couche d'alumine et les particules actives de traitement constituées de platine.

Afin de générer un plasma de décharge à barrière diélectrique (DBD), les moyens de génération d'un plasma comprennent deux électrodes 12, 13 disposées respectivement sur deux faces opposées du support 10, et un dispositif auxiliaire permettant l'application de l'impulsion de tension aux électrodes.

La décharge est ainsi réalisée entre une électrode de masse 12, par exemple en duralumin, et une électrode 13 dite électrode "chaude" par exemple en cuivre (Cu).

Cette deuxième électrode 13 est de faible épaisseur, au maximum de quelques millimètres. A titre d'exemple, elle peut être formée d'un adhésif métallique, à colle conductrice, venant directement adhérer sur une face du support monobloc 10.

L'électrode 13 est désignée comme "chaude" car elle reçoit une impulsion de tension générée par un dispositif auxiliaire, également source de courant électrique. C'est l'application de cette impulsion de tension qui permet la génération du plasma. Il n'y a pas de valeur minimum et de valeur maximum à la durée de l'impulsion de tension, à sa valeur crête.

En revanche, afin de former une barrière diélectrique, une plaque en matière isolante 14 est disposée ici entre l'électrode de masse 12 et le support 10.

Cette plaque en matière isolante est un matériau diélectrique de permittivité relative adaptée, typiquement entre 3,5 (quartz) et 4 000 (BaTiO₃).

Les électrodes 12, 13 s'étendent ainsi parallèlement aux plans des canaux 11, de telle sorte que le plasma DBD est généré à l'intérieur des canaux 11, dans l'épaisseur du support 10.

La valeur crête de l'impulsion de tension qui doit être appliquée à l'électrode chaude 13 est essentiellement déterminée par la valeur de l'épaisseur choisie pour le support 10. Ainsi la tension est d'autant plus élevée que l'épaisseur est élevée.

A titre d'exemples, pour de l'air sec, il faut appliquer une tension de 22 kV pour un support 10 d'épaisseur 2,5 mm comportant deux plans de canaux parallèles entre l'électrode 13 et l'électrode de masse 12, et il faut appliquer une tension de 38 kV pour un support 10 d'épaisseur 5,5 mm comportant quatre plans de canaux parallèles.

Le fonctionnement du dispositif n'est pas limité par l'épaisseur du support 10, pour autant que la valeur de la tension appliquée soit suffisamment élevée pour l'épaisseur choisie.

Il n'y a pas de valeur limite maximale à cette tension.

Le nombre de séries de canaux parallèles 11 et l'épaisseur du support monolithique 10 sont ainsi déterminés en fonction de la valeur de la tension électrique appliquée aux bornes des électrodes 12, 13.

La valeur de l'énergie spécifique déposée dans le plasma DBD dépend de la valeur de la tension appliquée et de la surface de l'électrode chaude 13.

On a constaté que l'énergie spécifique déposée est d'autant plus élevée que la distance séparant les électrodes et que la surface de l'électrode chaude 13 sont grandes.

A titre d'exemple, pour de l'air sec, et pour une surface d'électrode chaude 13 de l'ordre de 15 cm², on obtient ainsi une énergie spécifique de l'ordre de 4 mJ/cm³ pour une épaisseur de 2,5 mm avec deux plans de canaux parallèles et une énergie spécifique de l'ordre de 8,3 mJ/cm³ pour une épaisseur de 5,5 mm avec quatre plans de canaux parallèles.

Le fonctionnement du dispositif n'est pas limité par la surface de l'électrode chaude 13, pour autant que le dispositif auxiliaire générant l'impulsion de tension puisse débiter un courant électrique suffisant pour l'épaisseur et la surface choisie.

En fonctionnement, les électrodes 12, 13 et le dispositif auxiliaire permettant l'application de l'impulsion de tension sont adaptés pour la génération d'une décharge à une fréquence comprise entre 1 et 10 kHz. La durée de l'impulsion de courant correspondant à la décharge est une caractéristique physique du système. Les moyens de génération de plasma sont ainsi adaptés à générer une impulsion de tension d'au moins 20 kV ainsi qu'une impulsion de courant d'une durée typique de 100 ns.

On constate un taux de dégradation des molécules odorantes de l'ordre de 30 % pour une température ambiante de 80° C autour du dispositif de traitement.

Un tel dispositif de traitement par couplage plasma-catalyse est par conséquent particulièrement bien adapté à traiter des odeurs et des fumées de cuisson et à être incorporé dans une hotte domestique de filtration.

Afin d'améliorer l'efficacité d'un tel dispositif, on peut, comme illustré à la figure 2, juxtaposer deux dispositifs de traitement tels que décrits précédemment.

Dans ce mode de réalisation, les deux dispositifs de traitement juxtaposés ont une électrode commune, correspondant ici à l'électrode chaude 13 reliée à la source de courant électrique.

Les supports 10, 10' appartenant respectivement à chacun des dispositifs de traitement sont ainsi disposés de part et d'autre de cette électrode commune 13.

L'ensemble de ce système est disposé dans un conduit de circulation 15 des fumées de cuisson.

La disposition du système de traitement dans le conduit de circulation 15 est telle que les canaux 11 des supports 10, 10' sont disposés dans le sens de circulation des fumées ou gaz de cuisson à l'intérieur du conduit 15.

Ici, une portion 15a du conduit 15 en matière isolante s'étend entre une électrode 12, ici l'électrode de masse, et le support 10 d'un dispositif de traitement.

Symétriquement, une autre portion 15b du conduit 15 en matière isolante s'étend entre l'électrode 12', ici l'électrode de masse, et le support monolithique 10' de l'autre dispositif de traitement.

La matière isolante du conduit 15 de circulation des gaz est un matériau diélectrique de permittivité relative adaptée, typiquement entre 3,5 (quartz) et 4 000 (BaTiO₃).

Un second mode de réalisation d'un système de traitement par catalyse des odeurs est illustré à la figure 3.

Dans cet exemple, quatre dispositifs de traitement tels que décrits précédemment en référence à la figure 1 sont juxtaposés, une électrode commune permettant la génération d'un plasma entre deux dispositifs de traitement adjacents.

On obtient ainsi successivement, de haut en bas sur la figure 3, une électrode de masse 12 séparée d'un support 10 par une plaque diélectrique 14 et une électrode 13 disposée entre deux supports adjacents 10, 10' appartenant respectivement à deux dispositifs de traitement.

Une électrode de masse 12' est également disposée entre deux supports 10', 10" appartenant à deux autres dispositifs de traitement adjacents.

De part et d'autre de cette électrode de masse 12' sont disposées des plaques diélectrique 14', 14".

Enfin, une électrode commune 13" est disposée entre les supports 10", 10"' appartenant respectivement aux deux derniers dispositifs de traitement juxtaposés.

Une plaque diélectrique 14"' et une électrode de masse 12"' sont disposées en bas de l'empilement des dispositifs de traitement.

On peut ainsi multiplier les dispositifs de traitement juxtaposés de manière à améliorer l'efficacité du traitement des fumées de cuisson.

Les systèmes de traitement tels que décrits précédemment sont particulièrement bien adaptés à équiper une hotte de filtration des fumées de cuisson telle qu'une hotte de filtration domestique illustrée à la figure 4.

Dans son principe général, cette hotte de filtration permet d'évacuer les fumées récupérées au-dessus d'un plan de cuisson et qui sont extraites dans le conduit d'évacuation 15 grâce à un ventilateur 16.

Le dispositif de traitement conforme à l'invention peut être disposé à l'intérieur du conduit 15 de telle sorte que les fumées traversent ce dispositif de traitement par l'intermédiaire des canaux 11.

Une telle hotte de filtration a généralement un débit de l'ordre de 500 m³/h, les gaz ou fumées de cuisson traversant le dispositif de traitement à une température relativement basse, de l'ordre de 70 - 80° C.

Le plasma généré ainsi dans le catalyseur, sur le trajet du gaz de cuisson, permet de dégrader de manière efficace les molécules odorantes responsables des mauvaises odeurs de cuisson.

## Revendications

1. Dispositif de traitement par catalyse des odeurs de cuisson, comportant un support monolithique (10), comprenant des canaux (11) de passage des fumées de cuisson, et des particules actives de traitement déposées sur le support monolithique (10), et des moyens de génération d'un plasma de décharge (12, 13) disposés de part et d'autre du support monolithique (10), **caractérisé en ce que** le support monolithique (10) est revêtu d'un revêtement d'oxydes minéraux sur lequel sont déposées les particules actives de traitement, les particules actives de traitement étant formées d'un ou plusieurs métaux choisis parmi le platine, le palladium, le rhodium, l'or, l'argent, le ruthénium, le fer, le cuivre, le cobalt, le nickel, le manganèse ou le chrome.

2. Dispositif de traitement conforme à la revendication 1, **caractérisé en ce que** les moyens de génération d'un plasma de décharge comprennent deux électrodes (12, 13) disposées respectivement sur deux faces opposées du support monolithique (10).

3. Dispositif de traitement conforme à l'une des revendications 1 à 2, **caractérisé en ce qu'**il comprend une plaque en matière isolante (14) disposée entre une électrode (12) et le support monolithique (10).

4. Dispositif de traitement conforme à l'une des revendications 1 à 3, **caractérisé en ce que** le support monolithique (10) comprend au moins deux séries de canaux parallèles (11) s'étendant respectivement dans des plans parallèles, et **en ce que** les électrodes (12, 13) des moyens de génération de plasma de décharge sont des plaques disposées parallèlement auxdits plans des canaux.

5. Dispositif de traitement conforme à la revendication 4, **caractérisé en ce que** le nombre de séries de canaux parallèles (11) du support monolithique (10) est déterminé en fonction de la valeur de la tension électrique appliquée aux bornes des électrodes.

6. Dispositif de traitement conforme à l'une des revendications 1 à 5, **caractérisé en ce que** le support monolithique (10) a une épaisseur, entre les électrodes (12, 13) des moyens de génération de plasma de décharge, déterminée en fonction de la valeur de la tension électrique appliquée aux bornes des électrodes.

7. Dispositif de traitement conforme à l'une des revendications 1 à 6, **caractérisé en ce que** les moyens de génération de plasma de décharge sont adaptés à générer une impulsion de tension d'au moins 20 kV, ainsi qu'une impulsion de courant de durée typique de 100 ns, à une fréquence comprise entre 1 Hz et 10 kHz.

8. Système de traitement par catalyse des odeurs dans des fumées de cuisson, **caractérisé en ce qu'**il comprend au moins deux dispositifs de traitement conformes à l'une de revendications 1 à 7, les moyens de génération de plasma de décharge de deux dispositifs de traitement juxtaposés comprenant une électrode commune (13, 12', 13").

9. Système de traitement conforme à la revendication 8, **caractérisé en ce qu'**il est disposé dans un conduit de circulation (15) des fumées de cuisson, une portion de conduit (15a, 15b) en matière isolante s'étendant entre une électrode (12, 12') et le support monolithique (10, 10') d'au moins un dispositif de traitement.

10. Hotte de filtration des fumées de cuisson, **caractérisée en ce qu'**elle comprend un dispositif de traitement conforme à l'une des revendications 1 à 7.

11. Hotte de filtration des fumées de cuisson, **caractérisée en ce qu'**elle comprend un système de traitement conforme à l'une des revendications 8 ou 9.

## Claims

1. A device for catalytic treatment of cooking smells, the device including a monolithic support (10), comprising passages (11) for cooking fumes, and active treatment particles deposited on the monolithic support (10), and means (12, 13) disposed on respective opposite sides of the monolithic support (10) for generating a discharge plasma, **characterized in that** the monolithic support (10) is coated with mineral oxides on which the active treatment particles are deposited, the active treatment particles being formed of one or more metals chosen from platinum, palladium, rhodium, gold, silver, ruthenium, iron, copper, cobalt, nickel, manganese or chromium.

2. A treatment device according to claim 1, **characterized in that** the means for generating a discharge plasma comprise two electrodes (12, 13) respectively disposed on two opposite faces of the monolithic support (10).

3. A treatment device according to either claim 1 or claim 2, **characterized in that** it comprises a plate of insulating material (14) disposed between one electrode (12) and the monolithic support (10).

4. A treatment device according to any one of claims 1 to 3, **characterized in that** the monolithic support (10) comprises at least two series of parallel passages (11) extending respectively in parallel planes, and **in that** the electrodes (12, 13) of the discharge plasma generating means are plates disposed parallel to said planes of the passages.

5. A treatment device according to claim 4, **characterized in that** the number of series of parallel passages (11) in the monolithic support (10) is determined based on the value of the electrical voltage applied to the terminals of the electrodes.

6. A treatment device according to any one of claims 1 to 5, **characterized in that** the monolithic support (10) has a thickness, between the electrodes (12, 13) of the discharge plasma generating means, that is determined based on the value of the a function of the electrical voltage applied to the terminals of the electrodes.

7. A treatment device according to any one of claims 1 to 6, **characterized in that** the discharge plasma generation means are adapted to generate a voltage pulse of at least 20 kV and a current pulse with a typical duration of 100 ns at a frequency from 1 Hz to 10 kHz.

8. A system for catalytically treating smells in cooking fumes, **characterized in that** it comprises at least two treatment devices according to any one of claims 1 to 7, the discharge plasma generation means of two juxtaposed treatment devices having a common electrode (13, 12', 13").

9. A treatment system according to claim 8, **characterized in that** it is disposed in a duct (15) for passage of the cooking fumes, a duct portion (15a, 15b) of insulating material extending between an electrode (12, 12') and the monolithic support (10, 10') of at least one treatment device.

10. A hood for filtering cooking fumes, **characterized in that** it comprises a treatment device according to any one of claims 1 to 7.

11. A hood for filtering cooking fumes, **characterized in that** it comprises a treatment system according to either claim 8 or claim 91.

## Patentansprüche

1. Vorrichtung zur katalytischen Behandlung von Küchengerüchen, enthaltend einen monolithischen Träger (10) mit Kanälen (11) zum Durchtritt von Kochdünsten und aktive Partikel zur Behandlung, die auf den monolithischen Träger (10) aufgebracht sind, sowie Mittel (12, 13) zum Erzeugen eines Entladungsplasmas, die beiderseits des monolithischen Trägers (10) angeordnet sind, **dadurch gekennzeichnet, dass** der monolithische Träger (10) mit einer Mineraloxidbeschichtung beschichtet ist, auf welche die aktiven Behandlungspartikel aufgebracht sind, wobei die aktiven Behandlungspartikel aus einem oder mehreren Metallen ausgewählt aus Platin, Palladium, Rhodium, Gold, Silber, Ruthenium, Eisen, Kupfer, Kobalt, Nickel, Mangan bzw. Chrom gebildet sind.

2. Behandlungsvorrichtung nach Anspruch 1, **dadurch gekennzeichnet, dass** die Mittel zum Erzeugen eines Entladungsplasmas zwei Elektroden (12, 13) enthalten, die auf zwei jeweiligen entgegengesetzten Seiten des monolithischen Trägers (10) angeordnet sind.

3. Behandlungsvorrichtung nach einem der Ansprüche 1 bis 2, **dadurch gekennzeichnet, dass** sie eine Platte (14) aus Isoliermaterial aufweist, die zwischen einer Elektrode (12) und dem monolithischen Träger (10) angeordnet ist.

4. Behandlungsvorrichtung nach einem der Ansprüche 1 bis 3, **dadurch gekennzeichnet, dass** der monolithische Träger (10) zumindest zwei Reihen von parallel verlaufenden Kanälen (11) aufweist, die sich jeweils in parallelen Ebenen erstrecken, und dass die Elektroden (12, 13) der Mittel zum Erzeugen eines Entladungsplasmas Platten sind, die parallel zu den Kanalebenen angeordnet sind.

5. Behandlungsvorrichtung nach Anspruch 4, **dadurch gekennzeichnet, dass** die Anzahl an Reihen parallel verlaufender Kanäle (11) des monolithischen Trägers (10) in Abhängigkeit von dem Wert der an den Anschlüssen der Elektroden angelegten elektrischen Spannung bestimmt wird.

6. Behandlungsvorrichtung nach einem der Ansprüche 1 bis 5, **dadurch gekennzeichnet, dass** der monolithische Träger (10) zwischen den Elektroden (12, 13) der Mittel zum Erzeugen eines Entladungsplasmas eine Dicke aufweist, die in Abhängigkeit von dem Wert der an den Anschlüssen der Elektroden angelegten elektrischen Spannung bestimmt wird.

7. Behandlungsvorrichtung nach einem der Ansprüche 1 bis 6, **dadurch gekennzeichnet, dass** die Mittel zum Erzeugen eines Entladungsplasmas darauf abgestimmt sind, einen Spannungsimpuls von mindestens 20 kV sowie einen Stromimpuls mit einer typischen Impulsdauer von 100 ns bei einer Frequenz von 1 Hz bis 10 kHz zu erzeugen.

8. Behandlungssystem zur katalytischen Behandlung von Gerüchen in Kochdünsten, **dadurch gekennzeichnet, dass** es zumindest zwei Behandlungsvorrichtungen nach einem der Ansprüche 1 bis 7 aufweist, wobei die Mittel zum Erzeugen eines Entladungsplasmas der beiden nebeneinandergeordneten Behandlungsvorrichtungen eine gemeinsame Elektrode (13, 12', 13") aufweisen.

9. Behandlungssystem nach Anspruch 8, **dadurch gekennzeichnet, dass** es in einer Umlaufleitung (15) für die Kochdünste angeordnet ist, wobei ein Leitungsabschnitt (15a, 15b) aus Isoliermaterial sich zwischen einer Elektrode (12, 12') und dem monolithischen Träger (10, 10') von zumindest einer Behandlungsvorrichtung erstreckt.

10. Filterhaube zum Ausfiltern von Kochdünsten, **dadurch gekennzeichnet, dass** sie eine Behandlungsvorrichtung nach einem der Ansprüche 1 bis 7 aufweist.

11. Filterhaube zum Ausfiltern von Kochdünsten, **dadurch gekennzeichnet, dass** sie ein Behandlungssystem nach einem der Ansprüche 8 oder 9 aufweist.
